# NEUE EUROPÄISCHE PATENTSCHRIFT

(11) **EP 2 166 154 B2**
(45) Veröffentlichungstag und Bekanntmachung des Hinweises auf die Entscheidung über den Einspruch: **07.11.2018**
(45) Hinweis auf die Patenterteilung: 27.04.2016
(21) Anmeldenummer: 09007438.6
(22) Anmeldetag: 04.06.2009
(51) Int. Cl.: E01C 19/00, B62D 33/063

(54) **BAUMASCHINE MIT EINEM SCHUTZDACHAUFBAU FÜR DEN FÜHRERSTAND**
CONSTRUCTION MACHINE WITH PROTECTIVE ROOF STRUCTURE FOR THE DRIVER STAND
MACHINE DE CHANTIER AVEC TOIT DE PROTECTION POUR LE POSTE DE CONDUITE

(30) Priorität: 17.09.2008 DE 102008047583
(43) Veröffentlichungstag der Anmeldung: 24.03.2010
(73) Patentinhaber: BOMAG GmbH, 56154 Boppard (DE)
(72) Erfinder: Haubrich, Thomas, 56290 Gödenroth (DE); Klein, Thomas, 56653 Wehr (DE); Lang, Markus, 55469 Pleizenhausen (DE)
(74) Vertreter: Lang, Friedrich

(56) Entgegenhaltungen:
- EP-A1- 0 810 324
- DE-A1- 19 513 551
- DE-U1- 9 206 935
- DE-U1- 20 000 993
- DE-U1-202007 005 756
- JP-A- H11 140 816

## Beschreibung

Die Erfindung betrifft eine Baumaschine mit einem Schutzdachaufbau bzw. einem Wetterschutzdach für den Führerstand der Baumaschine. Die Erfindung betrifft insbesondere eine Straßenfräse oder Bodenverdichtungsmaschine.

Ein solcher Schutzdachaufbau bei dem das Schutzdach auf einem hinteren Rahmenteil gehalten ist, zeigt die DE 39 32 600 C2 (vgl. dort Fig. 1). Weiterhin ist aus dem Stand der Technik ein Schutzdachaufbau bekannt, bei dem das Schutzdach auf wenigstens einem vorderen Rahmenteil bzw. Tragrahmen und auf wenigstens einem hinteren Rahmenteil bzw. Tragrahmen angeordnet ist, vgl. beispielsweise die DE 200 00 993 U1. Zudem sind solche Schutzdachaufbauten bekannt, die einen Klappmechanismus umfassen, um den Schutzdachaufbau wahlweise zwischen einer Arbeitsposition bzw. Arbeitsstellung und einer Transportposition bzw. Transportstellung überführen zu können. In der eingeklappten bzw. eingeschwenkten Transportposition ist der Schutzdachaufbau geschützt und die Gesamthöhe der Baumaschine reduziert. Die Baumaschine kann dann bspw. zum Transport auf einem Tieflader verladen oder in einem Gebäude mit niedriger Deckenhöhe abgestellt werden. Um das Einklappen und Ausklappen des Schutzdachaufbaus zu ermöglichen sind die Rahmenteile schwenkbar an der Baumaschine angeordnet bzw. angelagert.

Bei einer Vielzahl von Baumaschinen muss der Bediener bzw. Maschinenführer die Baumaschine präzise steuern und überwachen können. Dies erfordert, dass sich der Bediener teilweise ziemlich weit rechts oder ziemlich weit links auf dem Führerstand der Baumaschine aufhalten muss. Aus dem Stand der Technik sind Baumaschinen mit zwei Steuerkonsolen bekannt, die auf der linken und auf der rechten Seite des Führerstandes angeordnet sind. Nachteilig bei den bekannten, insbesondere klappbaren, Schutzdachaufbauten ist, dass das Schutzdach insbesondere die seitlich äußeren Bereiche des Führerstandes nichts ausreichend abdeckt bzw. schützt. Es sind daher Lösungen bekannt, bei denen das Schutzdach über seitlich ausziehbare Schutzdachüberstände verfügt. Dies stellt jedoch insbesondere bei hochpreisigen Baumaschinen nur eine Behelfslösung dar.

Aufgabe der Erfindung ist es, einen verbesserten Schutzdachaufbau der eingangs genannten Art mit einem Klappmechanismus bereit zu stellen, mit dem insbesondere auch die seitlich äußeren Bereiche eines Führerstandes besser geschützt werden können.

Diese Aufgabe wird gelöst von einer Baumaschine mit einem Schutzdachaufbau mit den Merkmalen des Anspruches 1. Bevorzugte und vorteilhafte Weiterbildungen sind Gegenstand der abhängigen Ansprüche.

Erfindungsgemäß ist vorgesehen, dass das komplette Schutzdach relativ zur Baumaschine seitlich verschiebbar bzw. bewegbar angeordnet ist.

Der erfindungsgemäße Schutzdachaufbau hat viele Vorteile. Das Schutzdach kann vom Bediener der Baumaschine in einfacher Weise bedarfsgerecht platziert werden, was erfindungsgemäß zumindest auch die seitlich äußeren Bereiche des Führerstandes mit einschließt. Das Schutzdach kann in eine gewünschte seitliche Position verschoben oder auch aus einer unerwünschten seitlichen Position weggeschoben werden. Weiterhin erweist sich der erfindungsgemäße Schutzdachaufbau als sehr robust und qualitativ ansprechend.

Eine seitliche Richtung erstreckt sich im wesentlichen senkrecht zu einer Längsachse oder Hauptbewegungsrichtung der Baumaschine. Bevorzugt ist vorgesehen, dass das Schutzdach in seitlicher Richtung schmaler ausgebildet ist als die Baumaschine im Bereich des Führerstandes. Insbesondere ist vorgesehen, dass die seitlichen Außenkanten des Schutzdaches jeweils in eine Position gebracht werden können, welche mit einem seitlichen Außenumriss der Baumaschine zusammenfällt oder darüber hinaus ragt. Insbesondere ist vorgesehen, dass das Schutzdach auch die seitlichen Zugangsbereiche und Einstiegshilfen zum Führerstand überdecken kann.

Gemäß einer bevorzugten Weiterbildung ist vorgesehen, dass das vordere Rahmenteil bzw. der vordere Tragrahmen relativ zur Baumaschine seitlich verschiebbar angeordnet ist und kraftschlüssig mit dem Schutzdach verbunden ist, so dass das Schutzdach und das vordere Rahmenteil eine gemeinsame, gekoppelte bzw. synchrone seitliche Bewegung ausführen können. Beim Verschieben des Schutzdaches wird das vordere Rahmenteil quasi mitbewegt und umgekehrt.

Gemäß einer bevorzugten Weiterbildung hiervon ist vorgesehen, dass das vordere Rahmenteil mittels eines Linearlagers an der Baumaschine angeordnet ist, um die seitliche Bewegung zu ermöglichen. Bevorzugt ist vorgesehen, dass dieses Linearlager gleichfalls auch als Schwenklager zum Einklappen des vorderen Rahmenteils ausgebildet ist. Bei dem Linearlager kann es sich um ein Linearkugellager oder um ein Lineargleitlager oder Kombinationen hiervon handeln. Bevorzugt weist das Linearlager eine Lagerbuchse, wie insbesondere Gleitbuchse oder Kugelbuchse, auf, die auf einer Lagerwelle angeordnet ist und sich relativ zu dieser Lagerwelle in deren Axialrichtung bewegen kann. Besonders bevorzugt ist die Lagerwelle im Querschnitt kreisförmig ausgebildet. Die kreisförmige bzw. kreiszylindrische Ausbildung ermöglicht, dass die Lagerbuchse auf der Lagerwelle auch drehbar gelagert ist. Auf diese Weise kann in besonders einfacher und verhältnismäßig kostengünstiger Weise die lineare Beweglichkeit des vorderen Rahmenteils und dessen Schwenkfunktion zusammengeführt werden. Insbesondere ist vorgesehen, dass an der Baumaschine wenigstens eine Lagerwelle und an dem vorderen Rahmenteil wenigstens eine hierzu korrespondierende Lagerbuchse angeordnet ist.

Erfindungsgemäß umfasst der Schutzdachaufbau wenigstens eine vordere Windschutzscheibe bzw. Frontscheibe, welche kraftschlüssig mit dem Schutzdach und/oder dem vorderen Rahmenteil verbunden bzw. gekoppelt ist und welche synchron einer seitlichen Bewegung des Schutzdaches folgt bzw. folgen kann. Hierdurch wird die Bewegung des Schutzdaches mit einer Bewegung der Windschutzscheibe gekoppelt und umgekehrt. Beim Verschieben des Schutzdaches muss daher die Windschutzscheibe nicht separat nachgeführt werden, was den Bedienkomfort aber auch die Sicherheit deutlich erhöht, da das Nachführen der Windschutzscheibe nicht vergessen werden kann.

Gemäß einer bevorzugten Weiterbildung ist vorgesehen, dass das Schutzdach mittels eines Linearlagers am hinteren Rahmenteil bzw. Tragrahmen angeordnet ist. Bevorzugt ist vorgesehen, dass dieses Linearlager gleichfalls auch als Schwenklager zwischen dem Schutzdach und dem hinteren Rahmenteil zum Einklappen des Schutzdachaufbaus dient. Hierdurch wird eine seitliche Bewegung des Schutzdaches relativ zum feststehenden bzw. nicht mitbewegten hinteren Rahmenteil bzw. Tragrahmen ermöglicht. Im Übrigen wird auf die obigen Ausführungen zum Linearlager zwischen dem vorderen Rahmenteil und der Baumaschine verwiesen, die für dieses Linearlager entsprechend gelten. Bevorzugt ist vorgesehen, dass an dem Schutzdach wenigstens eine Lagerbuchse und an dem hinteren Rahmenteil wenigstens eine hierzu korrespondierende Lagerwelle angeordnet ist.

Gemäß einer bevorzugten Weiterbildung ist vorgesehen, dass am hinteren Rahmenteil wenigstens eine Heckscheibe angeordnete ist, die bezüglich des Schutzdachaufbaus bzw. bezüglich des Führerstandes nach innen und bevorzugt nach oben schwenkbar bzw. klappbar ist. Hierdurch kann in vorteilhafter Weise eine Zugänglichkeit zum Motorraum der Baumaschine geschaffen werden.

Gemäß einer bevorzugten Weiterbildung ist vorgesehen, dass der erfindungsgemäße Schutzdachaufbau wenigstens einen Hydraulikzylinder umfasst, der den Schutzdachaufbau von der Arbeitsstellung in die Transportstellung überführt und umgekehrt. Alternativ oder ergänzend können auch ein Pneumatikzylinder und/oder ein elektromechanischer Antrieb vorgesehen sein. Diese Antriebskomponenten stellen eine Antriebskraft bereit zum Überführen des Schutzdachaufbaus von der Arbeitsstellung in die Transportstellung und umgekehrt.

Gemäß einer bevorzugten Weiterbildung hiervon ist vorgesehen, dass der Hydraulikzylinder oder dessen zugehöriger Hydraulikkreis mit wenigstens einem entsperrbaren Rückschlagventil ausgestattet ist, um ein unbeabsichtigtes Überführen des Schutzdachaufbaus in die Transportstellung oder umgekehrt zu verhindern. Das entsperrbare Rückschlagventil kann eine hydraulische Verriegelung des Hydraulikzylinders bewirken. Bei anderen Antriebskomponenten können entsprechende Schutzmechanismen vorgesehen sein, die gleichfalls ein unbeabsichtigtes Überführen des Schutzdachaufbaus in die jeweils andere Stellung zu verhindern.

Gemäß einer bevorzugten Weiterbildung ist vorgesehen, dass das Schutzdach in einer definierten, insbesondere mittleren Position bzw. Mittelstellung mittels einer Feststelleinrichtung feststellbar ist. Eine mittlere Position des Schutzdaches kann bspw. dann gegeben sein, wenn die Mittellinie des Schutzdaches mit der Mittellinie des hinteren Rahmenteils zusammenfällt. Bevorzugt ist das Schutzdach auch wenigstens in den beiden seitlich äußeren Positionen feststellbar. Eine Feststelleinrichtung ist insbesondere eine Arretiervorrichtung. Ein solches Feststellen oder Arretieren erhöht die Sicherheit. Eine Feststellung oder Arretierung kann bspw. durch eine mechanische Verzahnung oder einen Verriegelungsbolzen erfolgen, die sich beim Verschiebevorgang entriegeln lassen. Auch sind elektromechanische und/oder hydraulische und/oder pneumatische Feststellsysteme möglich. Die Feststelleinrichtung oder Arretiervorrichtung befindet sich bevorzugt am Schwenkgelenk zwischen dem Schutzdach und dem hinteren Rahmenteil.

Gemäß einer bevorzugten Weiterbildung ist vorgesehen, dass der Schutzdachaufbau nur dann in die Transportstellung überführbar ist, wenn sich das Schutzdach bezüglich den seitlichen Richtungen in einer definierten, insbesondere in der mittleren Position befindet. Diese Position bzw. mittlere Position kann bspw. über elektrische Kontaktschalter abgefragt werden, deren Signale auf eine Steuerelektronik einwirken.

Gemäß einer bevorzugten Weiterbildung hiervon ist vorgesehen, dass der erfindungsgemäße Schutzdachaufbau eine mechanische Sperrvorrichtung umfasst, welche ein Überführen des Schutzdachaufbaus in die Transportstellung verhindert, falls sich das Schutzdach nicht in der definierten bzw. mittleren Position befindet. Diese mechanische Sperrvorrichtung befindet sich bevorzugt am Schwenkgelenk zwischen dem Schutzdach und dem hinteren Rahmenteil. Dies wird nachfolgend im Zusammenhang mit den Figuren näher erläutert.

Gemäß einer bevorzugten Weiterbildung ist vorgesehen, dass das Schutzdach zum seitlichen Verschieben manuell, elektromechanisch, pneumatisch und/oder hydraulisch angetrieben ist. Besonders bevorzugt ist die manuelle Betätigung.

Nachfolgend wird im Zusammenhang mit den Figuren eine bevorzugte Ausführungsform der Erfindung erläutert. Die in den Figuren gezeigten und/oder nachfolgend beschriebenen Merkmale sind zugleich allgemeine Merkmale der Erfindung.

Es zeigen:
- Fig. 1:: einen erfindungsgemäßen Schutzdachaufbau in einer Arbeitsstellung an einer Baumaschine in einer perspektivischen Ansicht;
- Fig. 2:: den Schutzdachaufbau aus Figur 1 in der Transportstellung in einer Seitenansicht von rechts;
- Fig. 3:: den Schutzdachaufbau aus der Figur 1 in einer seitlichen Teilansicht von der linken Seite;
- Fig. 4a:: den Schutzdachaufbau aus Figur 1 in einer rechtsseitig verschobenen Position in einer perspektivischen Ansicht;
- Fig. 4b:: den Schutzdachaufbau aus Figur 1 in einer linksseitig verschobenen Position in einer perspektivischen Ansicht;
- Fig. 5:: den Schutzdachaufbau aus Figur 1 in einer linksseitig verschobenen Position gemäß Figur 4b in einer Vorderansicht;
- Fig. 6:: eine Ausführungsform eines Schwenklagers zwischen dem Schutzdach und dem hinterem Rahmenteil in einer ersten Position in einer perspektivischen Ansicht;
- Fig. 7a:: eine seitliche Schnittansicht auf das Schwenklager gemäß dem Schnittverlauf nach der Figur 6;
- Fig. 7b:: eine Detailansicht des geschnittenen Schwenklagers nach der Figur 6 in einer perspektivischen Ansicht;
- Fig. 8:: das Schwenklager nach der Figur 6 in einer zweiten Position in einer perspektivischen Ansicht;
- Fig. 9a:: eine seitliche Schnittansicht auf das Schwenklager gemäß dem Schnittverlauf nach der Figur 8;
- Fig. 9b:: eine Detailansicht des geschnittenen Schwenklagers nach der Figur 8 in einer perspektivischen Ansicht; und
- Fig. 10:: den Schutzdachaufbau aus Figur 1 mit geöffneter Heckscheibe in einer perspektivischen Ansicht von rechts vorne.

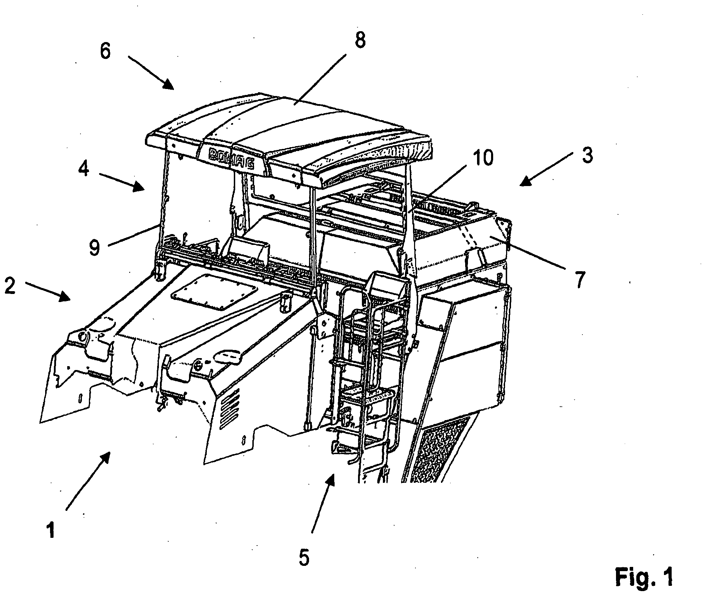

Die Figur 1 zeigt in einer perspektivischen Darstellung bzw. Ansicht von rechts vorne ausschnittsweise eine Baumaschine 1. Die Baumaschine 1 umfasst einen vorderen Teil 2 und einen hinteren Teil 3 in welchem der Motor angeordnet ist. Im hinteren Bereich ist eine Motorschutzhaube 7 angeordnet. Zwischen dem vorderen Teil 2 und dem hinteren Teil 3 der Baumaschine 1 befindet sich ein Führerstand 4 mit zwei Sitzplätzen mit je einer Steuerkonsole die auf der linken und auf der rechten Seite (bezüglich der Sitzposition) des Führerstandes 4 angeordnet sind. Der Führerstand 4 ist von einem Schutzdachaufbau bzw. Wetterschutz 6 abgedeckt. Zu diesem Schutzdachaufbau 6 gehören im wesentlichen ein vorderes Rahmenteil bzw. ein vorderer Tragrahmen 9 und ein hinteres Rahmenteil bzw. ein hinterer Tragrahmen 10 auf denen ein Schutzdach 8 angeordnet ist. In der gezeigten Darstellung befindet sich das Schutzdach 8 bezüglich einer seitlichen Richtung in einer mittleren Position. Der Schutzdachaufbau 6 verfügt über einen Klappmechanismus um diesen von der gezeigten Arbeitsstellung in eine Transportstellung überführen zu können und umgekehrt.

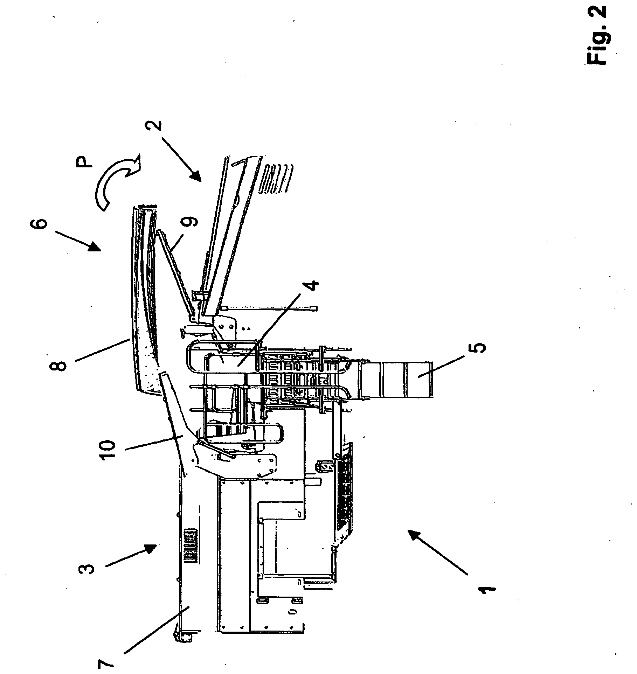

Die Figur 2 zeigt die Baumaschine 1 aus der Figur 1 in einer Seitenansicht von der rechten Seite. Der Schutzdachaufbau 6 ist hier eingeklappt und befindet sich in der Transportstellung, um bspw. zu Transport- und Lagerzwecken die Höhe der Baumaschine 1 zu reduzieren. Um den Schutzdachaufbau 6 von der in der Figur 1 gezeigten Arbeitsstellung in die hier gezeigte Transportstellung überführen zu können umfasst der Schutzdachaufbau 6 einen Klappmechanismus. Das vordere Rahmenteil 9 und das hintere Rahmenteil 10 sind schwenkbar an der Baumaschine 1 angeordnet bzw. angelagert. Fernerhin sind zwischen dem vorderen Rahmenteil 9 und dem Schutzdach 8, sowie dem hinteren Rahmenteil 10 und dem Schutzdach 8 Schwenkgelenke bzw. Schwenklager vorgesehen, so dass der Schutzdachaufbau 6 nach vorne in Richtung des vorderen Teils 2 der Baumaschine 1 gemäß Pfeildarstellung P quasi parallelogrammartig umgelegt bzw. umgeklappt oder eingeklappt werden kann. Ebenso ist es jedoch auch möglich, durch konstruktive Auslegung des Klappmechanismus, den Schutzdachaufbau 6 nach hinten, in Richtung des hinteren Teils 3 der Baumaschine 1 einzuklappen.

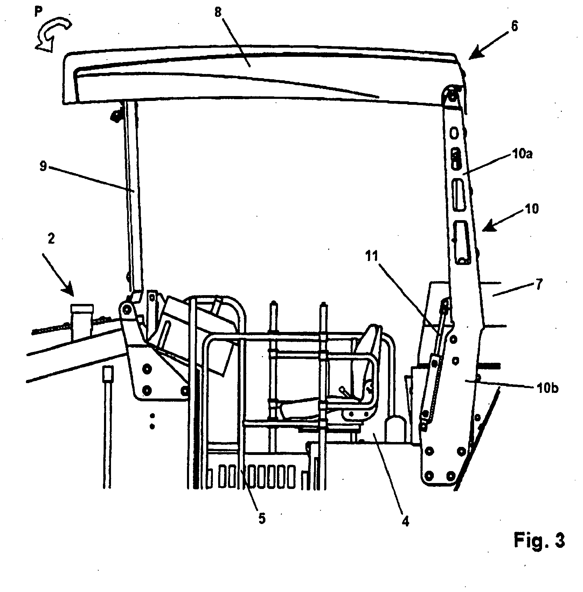

Die Figur 3 zeigt den Schutzdachaufbau 6 aus den Figuren 1 und 2 in einer seitlichen Teilansicht von der linken Seite. Der Schutzdachaufbau 6 befindet sich hier in der aufgeklappten Arbeitsstellung. Um den Schutzdachaufbau 6 von dieser Arbeitsstellung in die in der Figur 2 gezeigten Transportstellung überführen zu können, ist am hinteren Rahmenteil 10 ein doppelwirkender Hydraulikzylinder 11 angeordnet, der in zwei Richtungen eine Antriebskraft bzw. Stellkraft auf den Schutzdachaufbau aufbringen kann. Dieser Hydraulikzylinder 11 greift zwischen einem oberen Rahmenteil 10a und einem unteren Rahmenteil 10b an, wobei das untere Rahmenteil 10b feststehend an der Baumaschine 1 angeordnet ist und das obere Rahmenteil 10a am unteren Rahmenteil 10b mittels einer nicht näher gezeigten Schwenklagerung bzw. eines Schwenkgelenks schwenkbar befestigt ist. Ein entsprechender Hydraulikzylinder ist auch auf der rechten Seite des Schutzdachaufbaus 6 vorgesehen. Anstelle des einen Hydraulikzylinders 11 können auf einer Seite des Schutzdachaufbaus 6 auch mehrere zusammenwirkende Hydraulikzylinder und/oder Pneumatikzylinder und/oder elektromechanische Antriebe angeordnet sein. Der Hydraulikzylinder 11 kann ebenso auch am vorderen Rahmenteil 9 oder an einer anderen Stelle des Klappmechanismus des Schutzdachaufbaus 6 angeordnet sein. Bevorzugt ist vorgesehen, dass der Hydraulikzylinder 11, bspw. mittels wenigstens eines entsperrbaren Rückschlagventils, hydraulisch verriegelbar ist. Ein solches Rückschlagventil verhindert eine ungewollte Bewegung des Hydraulikzylinders 11. Damit kann der Schutzdachaufbau in der Arbeitsstellung oder auch in der Transportstellung gegen ein ungewolltes Überführen in die jeweils andere Stellung, bspw. durch angreifende Windkräfte, gesichert werden.

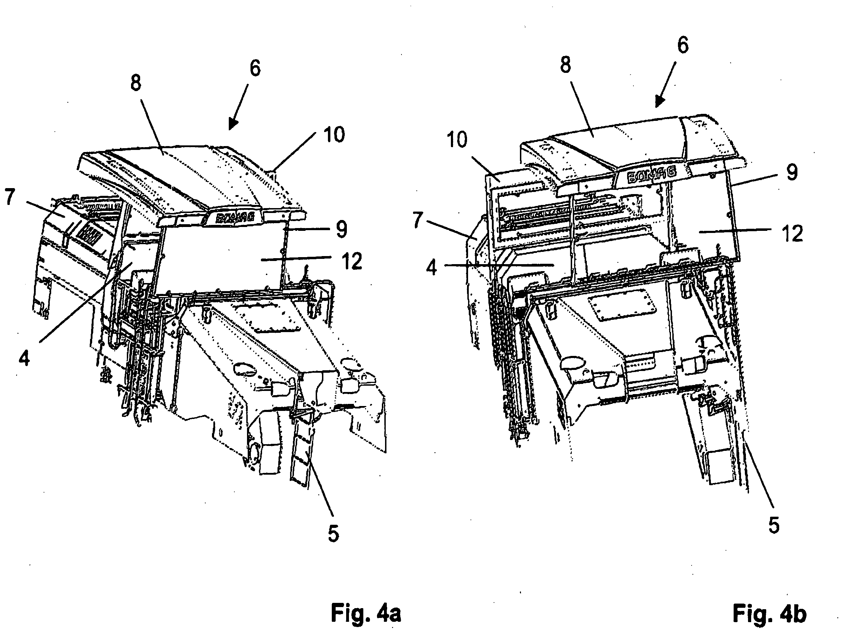

Die Figuren 4a und 4b zeigen den Schutzdachaufbau 6 in einer perspektivischen Ansicht von schräg vorne. Der Schutzdachaufbau 6 befindet sich in der Arbeitsstellung, wobei sich das Schutzdach 8 in einer äußeren, rechtsseitig verschobenen Position (Figur 4a) und in einer äußeren, linksseitig verschobenen Position (Figur 4b) befindet. In diesen äußeren Positionen überdeckt das Schutzdach 8 die seitlich äußeren Bereiche des Führerstandes 4 und auch die Einstiegshilfe 5. Beim Verschieben des Schutzdaches 8 aus einer mittleren Position in die gezeigten äußeren Positionen wird das vordere Rahmenteil bzw. der vordere Tragrahmen 9 des Schutzdachaufbaus 6 und eine hieran angeordnete Windschutzscheibe bzw. Frontscheibe 12 mitbewegt. Das Schutzdach 8 kann zusammen bzw. synchron mit der Windschutzscheibe 12 seitlich verschoben werden.

Wie ebenfalls aus den Figuren 4a und 4b erkennbar ist, bleibt beim seitlichen Verschieben des Schutzdaches 8 zusammen mit dem vorderen Tragrahmen 10 und der Windschutzscheibe 12 das hintere Rahmenteil bzw. der hintere Tragrahmen 10 sozusagen stehen. Insofern ist es auch vorteilhaft den Antrieb für den Klappmechanismus des Schutzdachaufbaus 6 im wesentlichen an dem hinteren Rahmenteil 10 anzuordnen, wie oben beschrieben.

Um bei der Seitenverschiebung des Schutzdaches 8 die seitliche Relativbewegung zwischen dem vorderen Rahmenteil 9 und der Baumaschine 1 und zwischen dem Schutzdach 8 und dem hinteren Rahmenteil 10 zu realisieren, sind an den jeweiligen Verbindungsstellen Linearlager angeordnet, was nachfolgend näher erläutert wird.

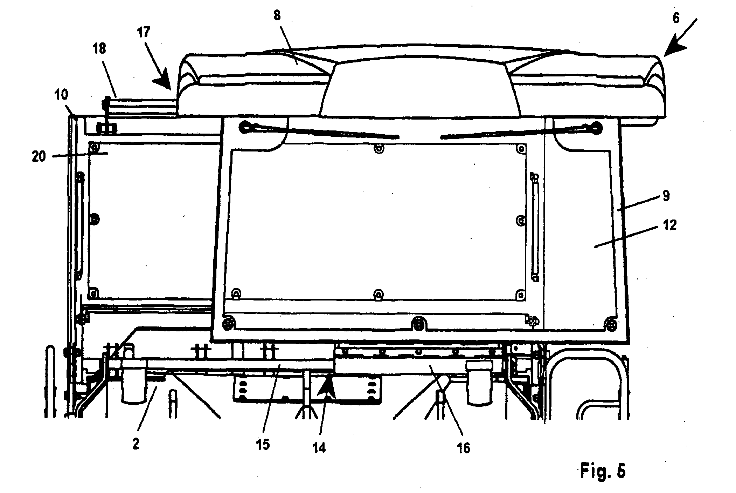

Die Figur 5 zeigt den Schutzdachaufbau 6 in einer linksseitig verschobenen Position gemäß Figur 4b in einer Vorderansicht. Das vordere Rahmenteil 9 ist mittels eins vorderen Linearlagers 14 an der Baumaschine 1 angeordnet. Dieses vordere Linearlager 14 umfasst eine Lagerwelle 15 in kreiszylindrischer Ausführung welche am vorderen Teil 3 der Baumaschine 1 befestigt ist und eine Lagerbuchse 16 welche am vorderen Rahmenteil 9 befestigt bzw. mit dem vorderen Rahmenteil 9 verbunden ist. Diese Anordnung kann jedoch auch umgekehrt ausgeführt sein. Ebenso ist es möglich mehrere Lagerwellen oder Lagerwellenabschnitte und/oder mehrere Lagerbuchsen vorzusehen. Das vordere Linearlager 14 dient gleichfalls auch als Schwenklager für das vordere Rahmenteil 9 beim Überführen des Schutzdachaufbaus 6 von der Arbeitsstellung in die Transportstellung und umgekehrt. Dies wird mittels der axialen und rotatorischen Beweglichkeit der Lagerbuchse 16 relativ zur Lagerwelle 15 erreicht.

Das Schutzdach 8 ist im Bereich seiner hinteren, d.h. zum hinteren Teil 3 der Baumaschine 1 weisenden Kante mittels eines ähnlich aufgebauten hinteren Linearlagers 17 am hinteren, feststehenden Rahmenteil 10 des Schutzdachaufbaus 6 angeordnet bzw. befestigt. Dieses hintere Linearlager 17 umfasst eine am hinteren Rahmenteil 10 befestigte kreiszylindrische Lagerwelle 18 und eine am Schutzdach 8 befestigte bzw. mit dem Schutzdach 8 verbundene Lagerbuchse 19, die in der Darstellung der Figur 5 nicht sichtbar ist. Diese Anordnung kann jedoch auch umgekehrt ausgeführt sein. Ebenso ist es möglich mehrere Lagerwellen oder Lagerwellenabschnitte und/oder mehrere Lagerbuchsen vorzusehen. Das hintere Linearlager 17 dient gleichfalls auch als Schwenklager zwischen dem Schutzdach 8 und dem hinteren Rahmenteil 10 beim Überführen des Schutzdachaufbaus 6 von der Arbeitsstellung in die Transportstellung und umgekehrt.. Dies wird mittels der axialen und rotatorischen Beweglichkeit der Lagerbuchse 19 relativ zur Lagerwelle 18 erreicht.

In der Figur 5 ist weiterhin eine Heckscheibe 20 dargestellt, welche am hinteren Rahmenteil bzw. Tragrahmen 10 mittels separater Schwenkgelenke und Gasdruckfedern schwenkbar befestigt ist.

Der Schutzdachaufbau 6 lässt sich nur dann von seiner Arbeitsstellung in seine Transportstellung überführen, wenn sich das Schutzdach 8 in einer definierten, hier mittleren Position befindet. Dies kann zum einen dadurch ermöglicht werden, dass die Position des Schutzdaches 8 mittels von elektrischen Kontaktschaltern abgefragt wird und ggf. ein Überführen des Schutzdachaufbaus 6 von einer Steuerelektronik verhindert wird. Ergänzend und/oder alternativ ist jedoch eine mechanische Sperrvorrichtung vorgesehen, die nachfolgend erläutert ist.

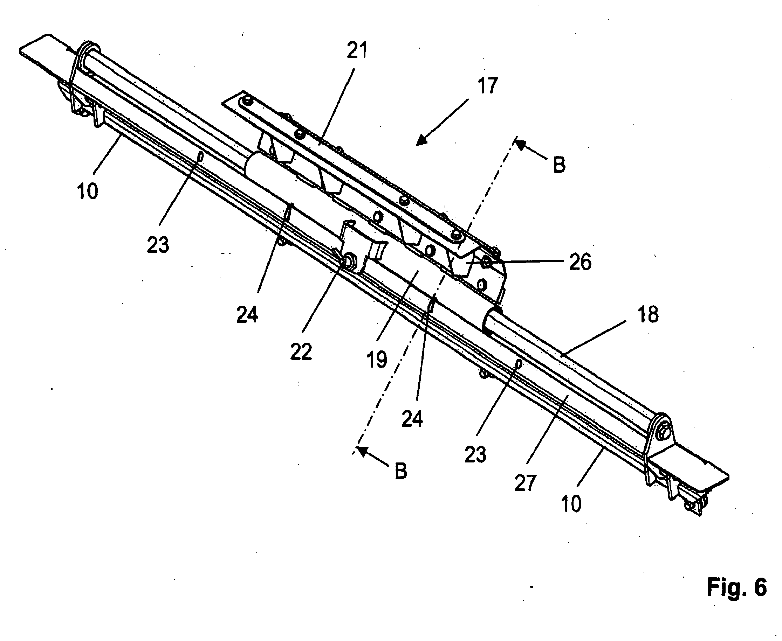

Die Figur 6 zeigt das hintere Linearlager 17, welches das Schutzdach 8 und das hintere Rahmenteil 10 verbindet, in einer perspektivischen Ansicht. Das Linearlager 17 umfasst eine Lagerwelle 18 und eine Lagerbuchse 19, die sich axial bzw. linear und rotatorisch auf der bzw. relativ zu der feststehenden Lagerwelle 19 bewegen kann. An der Lagerbuche 19 ist starr ein Befestigungsflansch 21 für die Verbindung mit dem Schutzdach 8 angeordnet. Das Bezugszeichen 26 bezeichnet eine Versteifungsrippe am Befestigungsflansch 21.

Fernerhin ist an der Lagerbuchse 19 eine Feststelleinrichtung 22 vorgesehen, mit welcher die Lagerbuchse 19 und damit das Schutzdach 8 in einer definierten und insbesondere mittleren Position und auch in einer seitlich verschobenen Position feststellbar bzw. arretierbar ist. Die hier gezeigte Feststelleinrichtung 22 ist im wesentlichen aus einem Bolzen bzw. Riegel gebildet, der in eine korrespondierende Öffnung oder Ausnehmung 23 an einer Sicherungsleiste 27 formschlüssig eingreifen kann. Zum Verschieben des Schutzdaches 8 lässt sich der Bolzen oder Riegel bspw. durch Aufbringen eines Drehmomentes oder einer Zugkraft entriegeln.

Um zu gewährleisten, dass der Schutzdachaufbau 6 nur dann von der Arbeitsstellung (vgl. Figur 1) in die Transportstellung (vgl. Fig. 2) überführt werden kann, wenn sich das Schutzdach 8 in einer definierten bzw. mittleren Position befindet, ist am Schutzdachaufbau 6 im Bereich des hinteren Linearlagers 17 eine mechanische Sperrvorrichtung vorgesehen. Hierzu sind an der Lagerbuchse 19 nach radial außen vorstehende Führungsleisten bzw. Führungsbleche 25 (siehe nachfolgende Figuren) vorgesehen, im Minimum wenigstens eine, welche beim Einklappen des Schutzdachaufbaus 6 in korrespondierende Öffnungen bzw. Ausnehmungen 24 in der Sicherungsleiste 27 kammartig eingreifen können, wie nachfolgend erläutert. Die Sicherungsleiste 27 ist Bestandteil des hinteren Rahmenteils 10 oder zumindest als Anbauteil ausgebildet und kraftschlüssig mit diesem verbunden.

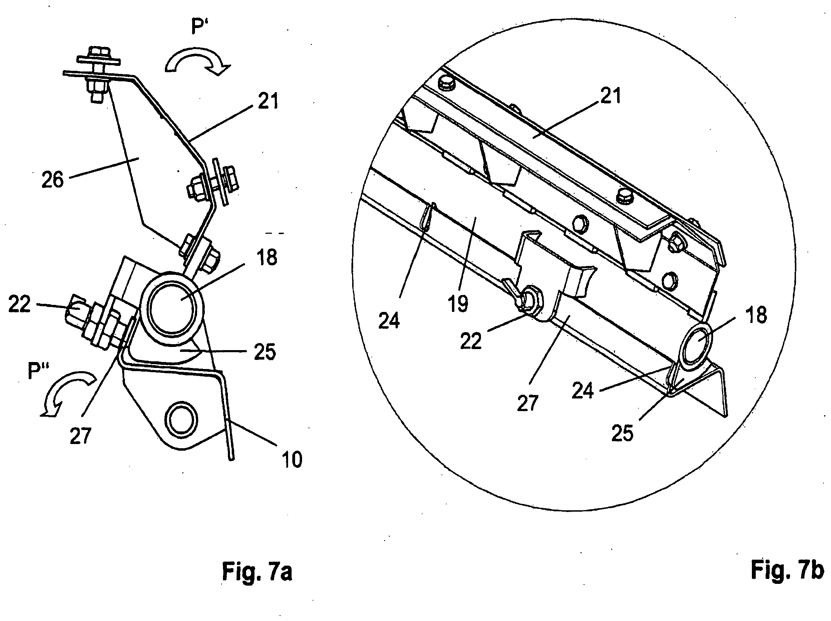

Die Figur 6 zeigt die Lagerbuchse 19 in einer ersten Winkelposition relativ zur Lagerwelle 18. In dieser ersten Position bzw. Winkelposition befindet sich der Schutzdachaufbau 6 in der Arbeitsstellung. Die Figur 7a zeigt eine seitliche Schnittansicht auf das hintere Schwenklager bzw. Linearlager 17 gemäß dem Schnittverlauf B-B in der Figur 6, wobei sich die Lagerbuchse 19 in der zuvor beschriebenen ersten Winkelposition befindet. Beim Überführen des Schutzdachaufbaus 6 von der Arbeitsstellung in die Transportstellung wird das hintere Rahmenteil 10 zusammen mit dem hinteren Linearlager 17 gemäß der unteren Pfeildarstellung P" nach links bewegt, während sich der Befestigungsflansch 21, gemäß der oberen Pfeildarstellung P', hierzu relativ nach rechts bewegt. Dieser Bewegungsablauf ist jedoch nur dann ermöglicht, wenn die an der Lagerbuchse 19 nach radial außen abstehenden Führungsbleche 25 die korrespondierende Öffnungen bzw. Ausnehmungen 24 in der Sicherungsleiste 27 kammartig durchlaufen bzw. durchgreifen können. Die Ausgangssituation ist nochmals vergrößert in der Figur 7b dargestellt, welche das gemäß Schnittverlauf B-B geschnittene Linearlager 17 in einer perspektivischen Ansicht zeigt.

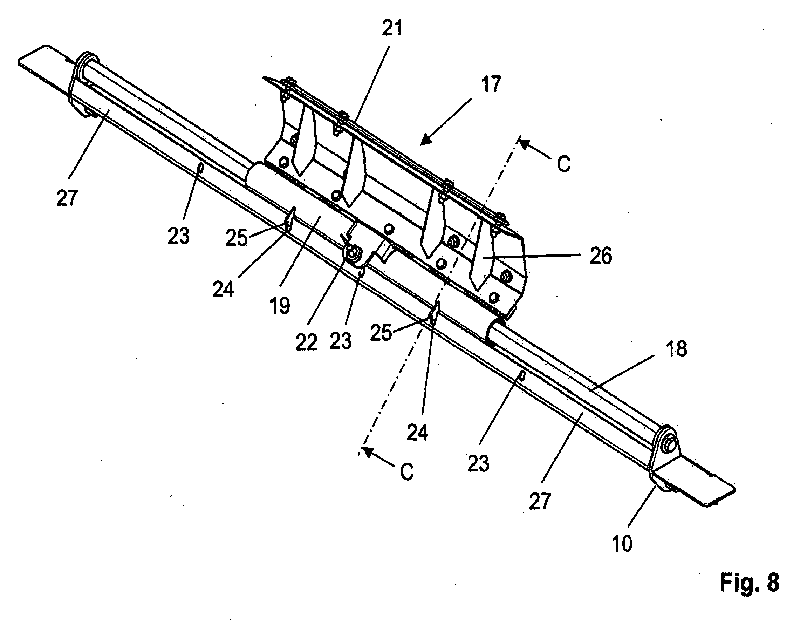

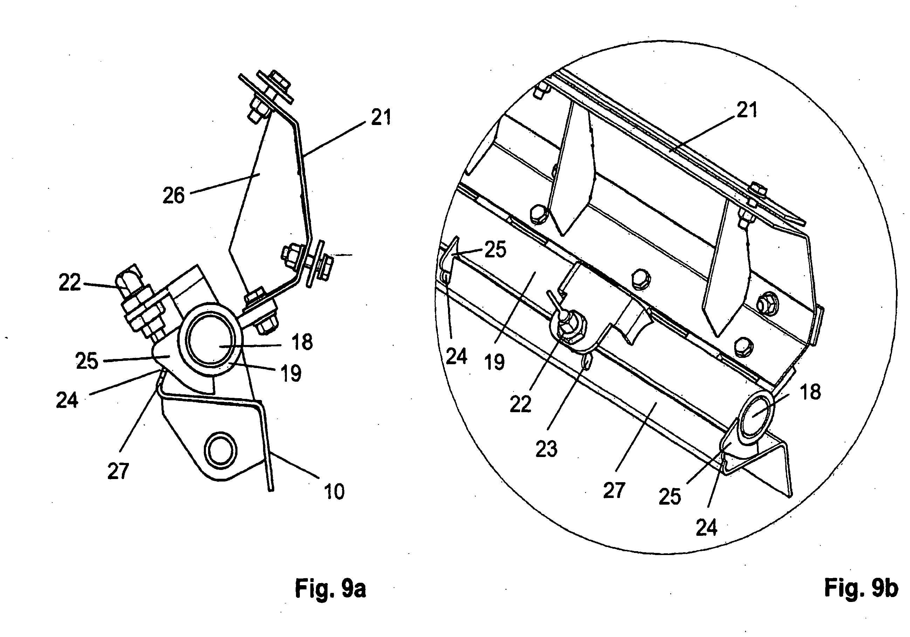

Die Figur 8 zeigt das hintere Linearlager 17, wobei sich hier die Lagerbuchse 19 in einer zweiten Position bzw. Winkelposition relativ zur Lagerwelle 18 befindet, was bedeutet, dass der Einklappvorgang zum Überführen des Schutzdachaufbaus 6 von der Arbeitsstellung in die Transportstellung voran geschritten ist. Deutlich zu erkennen ist hier, dass die Führungsbleche 25 die korrespondierenden Öffnungen 24 in der Sicherungsleiste 27 kammartig und gemäß der Darstellung von hinten durchgreifen. Dies ist ebenfalls in den Figuren 9a und 9b dargestellt, welche jeweils eine Schnittdarstellung gemäß dem Schnittverlauf C-C in der Figur 8 zeigen.

Befinden sich die Führungsbleche 25 nicht in Überdeckung mit den korrespondierenden Öffnungen 24 in der Sicherungsleiste 27, was konstruktionsbedingt immer dann der Fall ist, wenn sich das Schutzdach 8 nicht in der definierten bzw. mittleren Position (wie bspw. in der Figur 1 gezeigt) befindet, so schlagen die Führungsbleche 25 quasi von hinten an die Sicherungsleiste 27 an, was eine weitere Schwenkbewegung zwischen dem Schutzdach 8 und dem hinteren Rahmenteil 10 verhindert. Der Einklappvorgang wird hierdurch gestoppt und es wird sichergestellt, dass dieser Einklappvorgang nur dann durchgeführt werden kann, wenn sich das Schutzdach 8 in einer zuvor konstruktiv vorgegebenen Position, die insbesondere eine mittlere Position ist, befindet. Erfindungsgemäß ist eine Vielzahl von Führungsblechen 25 vorgesehen, sodass sich eine evtl. Druckkraft zwischen diesen Führungsblechen 25 und der Sicherungsleiste 27 auf mehrere Lastpunkte verteilen kann. Um die zuvor beschriebene mechanische Sperrwirkung zu erzielen, wäre jedoch ein Führungsblech 25 ausreichend.

Eine Sperrvorrichtung der zuvor beschriebenen Art lässt sich durch entsprechende Konstruktion des Schutzdachaufbaus 6 auch an den anderen Schwenklagern realisieren. Bevorzugt ist jedoch die Ausbildung am hinteren Linearlager 17, welches das Schutzdach 8 mit dem hinteren Rahmenteil 10 verbindet.

In der Figur 9b ist ebenfalls gut zu erkennen, dass sich beim Einklappen des Schutzdachaufbaus 6 die Feststelleinrichtung 22 quasi selbstständig aus der korrespondierenden Öffnung 23 in der Sicherungsleiste 27 löst, so dass hierauf kein besonderes Augenmerk zu richten ist.

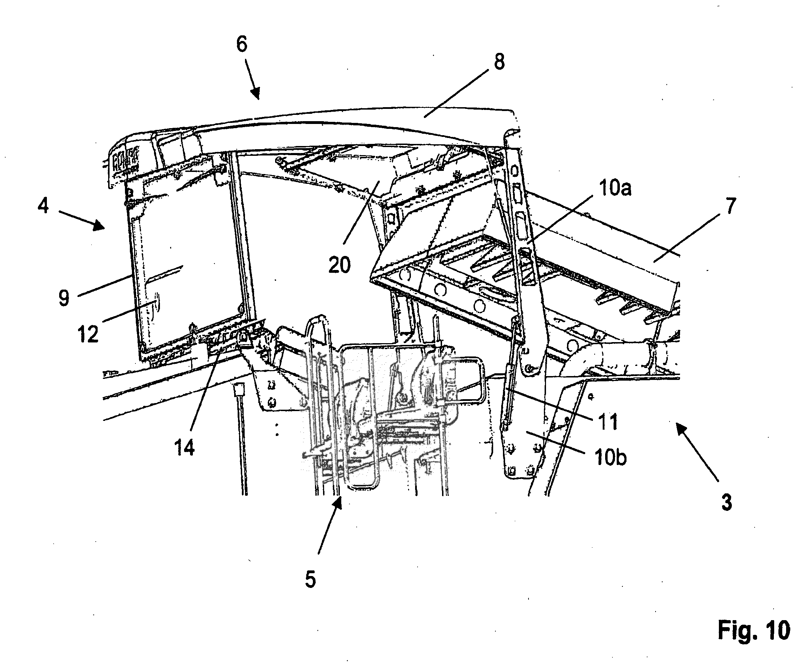

Die Figur 10 zeigt den Schutzdachaufbau 6 aus Figur 1 mit einer geöffneten Heckscheibe 20 in einer perspektivischen Ansicht von rechts vorne. Die Heckscheibe 20 ist am hinteren Rahmenteil 10 schwenkbar angeordnet, wobei die Schwenkbewegung durch Gasdruckfedern unterstützt sein kann. Gemäß der Darstellung ist die Heckscheibe 20 bezüglich des Führerstandes 4 nach innen und oben, d.h. in Richtung des Schutzdaches 8, geöffnet. Dies ermöglicht eine optimale Zugänglichkeit zum hinteren Teil 3 der Baumaschine 1, insbesondere zum Motorraum. In der Darstellung der Figur 10 ist auch die Motorschutzhaube 7 geöffnet, um die leichte Zugänglichkeit zum Motorraum bzw. Aggregatsraum über den Führerstand 4 und die hintere Heckscheibe 20 zu demonstrieren. Insbesondere ist die Heckscheibe 20 gegen unbeabsichtigtes Öffnen gesichert, bspw. mittels von zwei Sicherungsbolzen.

## Patentansprüche

1. Baumaschine (1), insbesondere eine Straßenfräse oder Bodenverdichtungsmaschine, mit einem Schutzdachaufbau (6) für den Führerstand (4) der Baumaschine (1), umfassend ein Schutzdach (8) das auf wenigstens einem vorderen Rahmenteil (9) und auf wenigstens einem hinteren Rahmenteil (10) angeordnet ist, wobei die Rahmenteile (9, 10) schwenkbar an der Baumaschine (1) angeordnet sind, sodass der Schutzdachaufbau (6) einklappbar und ausklappbar ist, um diesen wahlweise in eine Arbeitsstellung oder in eine Transportstellung bringen zu können,
**dadurch gekennzeichnet, dass**
das komplette Schutzdach (8) relativ zum Führerstand (4) der Baumaschine (1) seitlich verschiebbar angeordnet ist, wobei wenigstens eine vordere Windschutzscheibe (12) vorhanden ist, welche kraftschlüssig mit dem Schutzdach (8) und/oder dem vorderen Rahmenteil (9) verbunden ist, um synchron einer seitlichen Bewegung des Schutzdaches (8) folgen zu können.

2. Baumaschine (1) nach Anspruch 1,
**dadurch gekennzeichnet, dass**
das vordere Rahmenteil (9) relativ zur Baumaschine (1) seitlich verschiebbar angeordnet ist und kraftschlüssig mit dem Schutzdach (8) verbunden ist, so dass das Schutzdach (8) und das vordere Rahmenteil (9) eine gemeinsame, gekoppelte seitliche Bewegung ausführen können.

3. Baumaschine (1) nach Anspruch 2,
**dadurch gekennzeichnet, dass**
das vordere Rahmenteil (9) mittels eines Linearlagers (14) an der Baumaschine (1) angeordnet ist, um die seitliche Bewegung zu ermöglichen, wobei bevorzugt dieses Linearlager gleichfalls auch als Schwenklager zum Einklappen des vorderen Rahmenteils (9) ausgebildet ist.

4. Baumaschine (1) nach wenigstens einem der vorausgehenden Ansprüche,
**dadurch gekennzeichnet, dass**
das Schutzdach (8) mittels eines Linearlagers (17) am hinteren Rahmenteil (10) angeordnet ist,. wobei dieses Linearlager (17) gleichfalls als Schwenklager zwischen dem Schutzdach (8) und dem hinteren Rahmenteil (10) zum Einklappen des Schutzdachaufbaus (6) dient.

5. Baumaschine (1) nach wenigstens einem der vorausgehenden Ansprüche,
**dadurch gekennzeichnet, dass**
am hinteren Rahmenteil (10) wenigstens eine Heckscheibe (20) angeordnete ist, die bezüglich des Schutzdachaufbaus (6) nach innen und bevorzugt nach oben schwenkbar ist, um eine Zugänglichkeit zum Motorraum der Baumaschine (1) zu schaffen.

6. Baumaschine (1) nach wenigstens einem der vorausgehenden Ansprüche,
**gekennzeichnet durch**
wenigstens einen Hydraulikzylinder (11) der den Schutzdachaufbau (6) von der Arbeitsstellung in die Transportstellung überführt und umgekehrt.

7. Baumaschine (1) nach Anspruch 6,
**dadurch gekennzeichnet, dass**
der Hydraulikzylinder (11) oder dessen zugehöriger Hydraulikkreis mit wenigstens einem entsperrbaren Rückschlagventil ausgestattet ist, um ein unbeabsichtigtes Überführen des Schutzdachaufbaus (6) in die Transportstellung oder umgekehrt zu verhindern.

8. Baumaschine (1) nach wenigstens einem der vorausgehenden Ansprüche,
**dadurch gekennzeichnet, dass**
das Schutzdach (8) in einer mittleren Position und bevorzugt wenigstens in den beiden seitlich äußeren Positionen mittels einer Feststelleinrichtung (22) feststellbar ist.

9. Baumaschine (1) nach wenigstens einem der vorausgehenden Ansprüche,
**dadurch gekennzeichnet, dass**
dieser nur dann in die Transportstellung überführbar ist, wenn sich das Schutzdach (8) bezüglich den seitlichen Richtungen in einer definierten Position befindet.

10. Baumaschine (1) nach Anspruch 9,
**gekennzeichnet durch**
eine mechanische Sperrvorrichtung welche ein Überführen des Schutzdachaufbaus (6) in die Transportstellung verhindert, falls sich das Schutzdach (8) nicht in der definierten Position befindet.

11. Baumaschine (1) nach wenigstens einem der vorausgehenden Ansprüche,
**dadurch gekennzeichnet, dass**
das Schutzdach (8) zum seitlichen Verschieben manuell, elektromechanisch, pneumatisch und/oder hydraulisch angetrieben ist.

## Claims

1. A construction machine (1), especially for a road miller or soil compaction machine, with a protective canopy structure (6) for the operator's platform (4) of the construction machine (1) comprising a protective canopy (8) which is arranged on at least one front frame part (9) and on at least one rear frame part (10), the frame parts (9, 10) being arranged in a pivoting manner on the construction machine (1), so that the protective canopy structure (6) can be folded in or out in order to enable bringing the same optionally to a working position or a transport position, **characterized in that**
the complete protective canopy (8) is arranged to be laterally displaceable relative to the operator's platform (4) of the construction machine (1), wherein at least one front windshield (12) is provided, which is connected in a force-locking manner with the protective canopy (8) and/or the front frame part (9) in order to enable it to synchronously follow a lateral movement of the protective canopy (8).

2. The construction machine (1) according to claim 1,
**characterized in that**
the front frame part (9) is arranged to be laterally displaceable relative to the construction machine and is connected in a force-locking manner with the protective canopy (8), so that the protective canopy (8) and the front frame part (9) can perform a common coupled lateral movement.

3. The construction machine (1) according to claim 2,
**characterized in that**
the front frame part (9) is arranged on the construction machine (1) by means of a linear bearing (14) in order to enable the lateral movement, said linear bearing preferably also being configured as a swivel bearing for folding in the front frame part (9).

4. The construction machine (1) according to at least one of the preceding claims, **characterized in that**
the protective canopy (8) is arranged on the rear frame part (10) by means of a linear bearing (17), said linear bearing (17) also serving as a swivel bearing between the protective canopy (8) and the rear frame part (10) for folding in the protective canopy structure (6).

5. The construction machine (1) according to at least one of the preceding claims, **characterized in that**
at least one rear window (20) is arranged on the rear frame part (10), which window can be pivoted to the inside and preferably upwardly with respect to the protective canopy structure (6) in order to create accessibility to the engine compartment of the construction machine (1).

6. The construction machine (1) according to at least one of the preceding claims, **characterized by**
at least one hydraulic cylinder (11) which transfers the protective canopy structure (6) from the working position to the transport position and vice versa.

7. The construction machine (1) according to claim 7,
**characterized in that**
the hydraulic cylinder (11) or its associated hydraulic circuit is equipped with at least one unlockable non-return valve in order to prevent inadvertent transfer of the protective canopy structure (6) to the transport position or vice versa.

8. The construction machine (1) according to at least one of the preceding claims, **characterized in that**
the protective canopy (8) can be fixed by means of a fixing device (22) in a middle position and preferably at least in the two lateral outer positions.

9. The construction machine (1) according to at least one of the preceding claims, **characterized in that**
it can only be transferred to the transport position when the protective canopy (8) is in a defined position with respect to the lateral directions.

10. The construction machine (1) according to claim 10,
**characterized by**
a mechanical blocking device which prevents a transfer of the protective canopy structure (6) to the transport position if the protective canopy (8) is not in the defined position.

11. The construction machine (1) according to at least one of the preceding claims, **characterized in that**
the protective canopy (8) is driven manually, electromechanically, pneumatically and/or hydraulically for lateral displacement.

## Revendications

1. Engin de chantier (1), en particulier pour un engin de fraisage de chaussée ou un engin de compactage du sol, avec une structure (6) de pavillon de protection pour la plateforme de conduite (4) de l'engin de chantier (1) comprenant un pavillon de protection (8) qui est installé sur au moins une portion (9) de châssis avant et sur au moins une portion (10) de châssis arrière, les portions (9, 10) de châssis étant agencées de manière pivotante sur l'engin de chantier (1), de telle sorte que la structure (6) de pavillon de protection puisse être escamotée ou abaissée de manière à permettre d'amener celle-ci dans une position de travail ou dans une position de transport,
**caractérisée en ce que**
le pavillon de protection complet (8) est agencé de manière à pouvoir être déplacé latéralement par rapport à la plateforme de conduite (4) de l'engin de chantier (1), et au moins un pare-brise avant (12) est fourni, qui est couplé par un assemblage par force au pavillon de protection (8) et/ou à la portion (9) de châssis avant de manière à lui permettre de suivre de manière synchronisée un mouvement latéral du pavillon de protection (8).

2. Engin de chantier (1) selon la revendication 1,
**caractérisée en ce que**
la portion (9) de châssis avant est agencée de manière à pouvoir être déplacée latéralement par rapport à l'engin de chantier et est couplée par un assemblage par force au pavillon de protection (8), de telle sorte que le pavillon de protection (8) et la portion (9) de châssis avant puissent effectuer un mouvement latéral couplé commun.

3. Engin de chantier (1) selon la revendication 2,
**caractérisée en ce que**
la portion (9) de châssis avant est agencée sur l'engin de chantier (1) au moyen d'un palier linéaire (14) de manière à permettre un mouvement latéral, ledit palier linéaire étant aussi, de manière préférée, configuré sous forme d'un palier d'articulation pour replier la portion (9) de châssis avant.

4. Engin de chantier (1) selon au moins l'une des revendications précédentes,
**caractérisée en ce que**
le pavillon de protection (8) est agencé sur la portion (10) de châssis arrière au moyen d'un palier linéaire (17), ledit palier linéaire (17) servant aussi de palier d'articulation entre le pavillon de protection (8) et la portion (10) de châssis arrière pour replier la structure (6) du pavillon de protection.

5. Engin de chantier (1) selon au moins l'une des revendications précédentes,
**caractérisée en ce que**
au moins une lunette arrière (20) est agencée sur la portion (10) de châssis arrière, ladite lunette pouvant pivoter vers l'intérieur, et, de manière préférée, vers le haut, par rapport à la structure (6) de pavillon de protection de manière à créer une accessibilité au compartiment moteur de l'engin de chantier (1).

6. Engin de chantier (1) selon au moins l'une des revendications précédentes,
**caractérisée par**
au moins un vérin hydraulique (11) qui déplace la structure (6) de pavillon de protection de la position de travail à la position de transport, et inversement.

7. Engin de chantier (1) selon la revendication 7,
**caractérisée en ce que**
le vérin hydraulique (11), ou son circuit hydraulique associé, est équipé d'au moins un clapet anti-retour non verrouillable de manière à empêcher le déplacement, par inadvertance, de la structure (6) de pavillon de protection dans la position de transport ou inversement.

8. Engin de chantier (1) selon au moins l'une des revendications précédentes,
**caractérisée en ce que**
le pavillon de protection (8) peut être fixé au moyen d'un dispositif de fixation (22) dans une position médiane et, de manière préférée, au moins dans les deux positions latérales extérieures.

9. Engin de chantier (1) selon au moins l'une des revendications précédentes,
**caractérisée en ce que**
elle ne peut être amenée que dans la position de transport lorsque le pavillon de protection (8) est dans une position définie par rapport aux directions latérales.

10. Engin de chantier (1) selon la revendication 10,
**caractérisée par**
un dispositif de blocage mécanique qui empêche un mouvement de la structure (6) de pavillon de protection dans la position de transport si le pavillon de protection (8) n'est pas dans la position définie.

11. Engin de chantier (1) selon au moins l'une des revendications précédentes,
**caractérisée en ce que**
le pavillon de protection (8) est manoeuvré manuellement, électro-mécaniquement, pneumatiquement et/ou hydrauliquement pour son déplacement latéral.
